(19) Europäisches Patentamt
European Patent Office
Office européen des brevets

(11) **EP 2 226 751 A1**

(12) **EUROPEAN PATENT APPLICATION**

(43) Date of publication:
**08.09.2010 Bulletin 2010/36**

(51) Int Cl.:
***G06Q 10/00*** (2006.01)

(21) Application number: **09003040.4**

(22) Date of filing: **03.03.2009**

(84) Designated Contracting States:
**AT BE BG CH CY CZ DE DK EE ES FI FR GB GR HR HU IE IS IT LI LT LU LV MC MK MT NL NO PL PT RO SE SI SK TR**
Designated Extension States:
**AL BA RS**

(71) Applicant: **Siemens Aktiengesellschaft**
**80333 München (DE)**

(72) Inventors:
• **Ehlers, Petra Dr.**
**85107 Baar-Ebenhausen (DE)**
• **Köster, Gerta Dr.**
**81543 München (DE)**

(54) **Apparatus and method for analyzing a risk in a project**

(57) A risk-analysis apparatus (1) for analyzing a risk in a project (PJ), said project (PJ) involving a plurality of components (K), comprises database devices (2,3), and a processing platform (5) which are communicatively coupled to each other. The devices (2,3,5) are implemented to calculate a quantitative measure for an additional expense to said project (PJ) due to a time delay caused by each component (K). This includes setting a plurality of discrete time-delay intervals, determining for each time-delay interval and each component (K) a component-delay probability for the occurrence of a time delay caused by said component (K), the time delay falling within the respective time-delay interval; retrieving a cost value assigned to each of said time-delay intervals reflecting an additional expense to said project (PJ) due to a time delay caused by said component (K), the time delay falling within a respective time-delay interval, for each component (K), determining the quantitative measure as a function of the cost values and the component-delay probabilities.

## FIG 2

EP 2 226 751 A1

**Description**

This disclosure relates to a risk-analysis apparatus and a method for analyzing a risk in a, for example, technical project which involves a plurality of components. Further, a computer program product and a memory device is presented.

The analysis of risks in technical projects involving many interacting components is important for reducing potential costs, for example, related to unexpected time delays due to one or more of the components. A component leading to a time delay may be, for instance, a screw or fixing means holding a motor or engine. If the respective screw breaks there is a potential damage to the motor which must be repaired or replaced. Such a situation would lead to delay for providing an operable motor. However, other examples for a project can be contemplated.

In the past, at a technical level methods known as FMEA (failure mode and effects analysis) were utilized. Further, conventional methods for analyzing risks in projects are conducted in terms of workshops where experts discuss certain aspects of components or a project and assign intuitive risk values to the components. It is then necessary to assess the plausibility of such assignments essentially based on gut feelings of the experts involved in the projects. In those conventional methods, one gut feeling per component is determined. However, in principle, a plurality of risks can occur with respect to one component.

Therefore, it can be desirable to perform an aggregation of risks relating to one or more components to assess a plurality of aspects or risks. Earlier, an optical aggregation was proposed. Then the plausibility of a risk analysis is checked by considering a diagram showing dots or bubbles corresponding to risk scenarios in a plane. According to the distribution of the points or bubbles in this plane experts could estimate the plausibility of the risks associated to the bubbles and components. However, this conventional approach is not reproducible due to the discretion of the experts conducting the plausibility check.

Another conventional method for checking the plausibility of estimated risks in a project, considers only the highest risk for a respective component being the product of the (economic) consequence and the probability for the occurrence for one component. This highest risk is then compared to the gut feeling or intuitive risk assigned to the component by experts. It is a disadvantage of the latter method that, for example, a plurality of smaller risks leading to a relatively bad gut feeling became implausible. However, a reasonable aggregation of such (minor) risks could have justified such a bad gut feeling.

It is therefore an object of the present invention to provide for an improved apparatus or a method for analyzing a risk in a project considering also aggregated partial risks. It is also desirable to provide for a risk assessment process, in particular for time delays due to components being comprised in an analyzed project.

Therefore, a risk-analysis apparatus for analyzing a risk in a project wherein the project involves a plurality of components is disclosed. The risk-analysis apparatus includes a first data base device which for each component stores a risk value on a predetermined scale for an additional expense to said project due to a time delay caused by a said component. A processing platform coupled to a second data base device is utilized for calculating a quantitative measure for an additional expense to said project due to a time delay caused by each component. The processing platform is implemented to set a plurality of discrete time-delay intervals; to determine for each time-delay interval and each component a component-delay probability for the occurrence of a time delay caused by said component, the time delay falling within the respective time-delay interval; for each component to retrieve a cost value assigned to each of said time-delay intervals reflecting an additional expense to said project due to a time delay caused by said component, the time delay falling within a respective time-delay interval, and the cost value being stored in the second data base device; and for each component to determine the quantitative measure as a function of the cost values and the component-delay probabilities.

This disclosure further provides for a method for analyzing a risk in a project, said project involving a plurality of components comprising for at least one component the steps of: assessing a risk value on a predetermined scale for an additional expense to said project due to a time delay caused by said component; calculating a quantitative measure for an additional expense to said project due to a time delay caused by said component; comparing the risk value to the quantitative measure. Calculating the quantitative measure then comprises: setting a plurality of discrete time-delay intervals; for each time-delay interval, determining a component-delay probability for the occurrence of a time delay caused by said component, the time delay falling within the respective time-delay interval; assigning a cost value to each of said time-delay intervals reflecting an additional expense to said project due to a time delay caused by said component, the time delay falling within a respective time-delay interval; and determining the quantitative measure as a function of the cost values and the component-delay probabilities.

The proposed risk-analysis apparatus and method allows to aggregate partial risks responsible for the occurrence of time delays that are discretized by the before-mentioned time-delay intervals. This leads to a reliable plausibility check by comparing a risk value on a predetermined scale, which for instance, can be assessed by experts working on or operating the considered project. The respective risk value, for example, can correspond to an intuitive risk value or gut feeling of the experts with respect to the considered component causing a time delay. Generally, the term risk describes a negative event in the project having a certain probability and a certain amount of damage. In this disclosure it is in particular focused on time delays as a risk. The time delay, for instance, can cause a delayed market entry and therefore a loss of market share if the product concerns services or goods depending on the actual project components.

A respective cost value is assigned to each component and each time-delay interval, and may be input and stored in the respective data base devices by using an input device. As mentioned before, the risk values or the cost values can be assessed by experts in a workshop event. However, it is also possible to start from given values for a risk and/or cost values. Generally, the time delays are caused by technical defects or a malfunctioning of the respective components forming a project.

In one embodiment of the risk-analysis apparatus, the processing platform comprises a calculation device and a third data base device. The calculation device is then implemented to retrieve a plurality of independent scenario descriptions for each component, wherein the scenario descriptions are associated to the considered component. A respective scenario causes an additional expense to said project due to a scenario-time delay the scenario descriptions are then stored in the third data base device. A calculation device retrieves to a scenario probability for the occurrence of said scenario causing a time delay falling within respective time-delay interval for each scenario description and each time-delay interval. The scenario probabilities are then stored in a third data base device. A calculation device is also implemented to calculate the component-delay probability as a function of the scenario probabilities.

This embodiment implements an aspect of the method for analyzing a risk in a project wherein determining the component-delay probability comprises the steps of: setting a plurality of independent scenarios associated to said component, a scenario causing an additional expense to said project due to a scenario-time delay; for each scenario and each time-delay interval, assessing a scenario probability for the occurrence of said scenario causing a time delay falling within a respective time-delay interval; and calculating the component-delay probability as a function of the scenario probabilities.

If stochastically independent scenarios are considered, respective probabilities can be calculated efficiently. For example, calculating the component probability may comprise calculating a probability for the union of all scenarios. In particular, because the consideration of distinct time-delay intervals and the respective probabilities according to the scenarios for creating a time delay allows aggregating the associated risks and calculate the quantitative measure very efficiently.

For example, calculating or determining the quantitative measure may comprise for each time-delay interval multiplying the component probability and the cost value assigned to the respective time-delay interval for generating a partial cost value. Eventually, the partial cost values are summed to obtain the quantitative measure for each component. Similarly, the calculation device of the corresponding risk-analysis apparatus can be implemented to, for each time-delay interval, multiply the component-delay probability and the cost value assigned to the respective time-delay interval for generating a partial cost value. The calculation device further sums the partial cost values.

In order to perform a plausibility check between the (intuitive) risk values to the quantitative measures corresponding to a quantitative risk one may calculate the ratio of the risk value and the quantitative measure. One may further display each component in a risk value/quantitative measure diagram. In the distribution of, for example the dots representing a component, in such a risk value/quantitative measure diagram the plausibility of the risk analysis may be derived.

According to another aspect of the method for each of said components a delay probability for the occurrence of an additional expense corresponding to the quantitative measure is calculated. Then, each component can be displayed as a respective circular area wherein the circular area is dependent on the delay probability of the respective component. Consequently, in one embodiment of the risk-analysis apparatus, a display device is included which is implemented to illustrate each component in a risk value/quantitative measure diagram. In particular, the components can be displayed as bubbles.

While the main focus is on the assessment of time delays and the respective risks, the before mentioned cost values can also be assigned as a function of additional logistical efforts or a contractional penalty, for instance due to a delay or the delivery of a project or products according to the project.

This disclosure further relates to a computer program product comprising a computer readable program code embodied therein for performing a method for analyzing a risk in a project as disclosed above. Additionally, a memory device storing the computer program product is provided.

In the following certain aspects of the invention are explained referring to the following description taken in conjunction with accompanying drawings of which:

Figure 1 shows schematic representation of a project including components;

Figure 2 shows a schematic diagram showing an embodiment of a risk-analysis apparatus;

Figure 3 shows an illustration of a flow chart according to one aspect of a method for analyzing a risk in a project; and

Figure 4 shows a graph which is generated in accordance with an aspect of the method for risk analysis and which is suitable plausibility check.

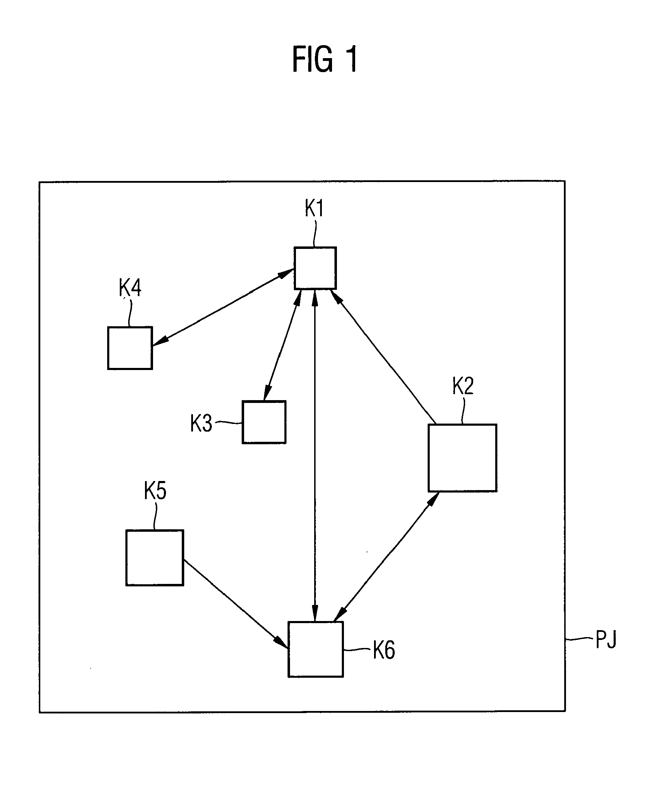

Figure 1 shows a schematic representation of a project PJ involving several components. The project PJ has for example components K1-K6 that at least partially inter dependent. This is shown with respect to arrows between the components K1-K6. For example, if a technical system is considered, the project and the system may comprise machines. In one scenario, a motor K6 could be attached by a component K5. Then K6 could stand for a motor or an engine which is fixed by a screw, where K5 stands for a fixing means such as a screw. If the screw does not work, hence, the motor gets loose, this has an influence on the operation of the component K6, i.e. the motor. This interaction is shown as the arrow pointing from component K5 to K6.

One can contemplate different situations, where projects PJ involve a plurality of components K1-K6. Since usually the components of a project interact with each other, it is important to determine risks for one or more components causing damages to the entire project PJ. For example, the time delay leading to a belated completion of the project, is usually considered a damage. It is now important to assess the aggregated risks for a time delay of the project PJ by analyzing the effects of the components K1-K6. It is in particular desirable to have a quantitative measure for the risk of a project which is potentially delayed. Further, in this risk analysis, the influence of psychological effects, for instance when assessing certain risks in workshops by experts, should be reduced.

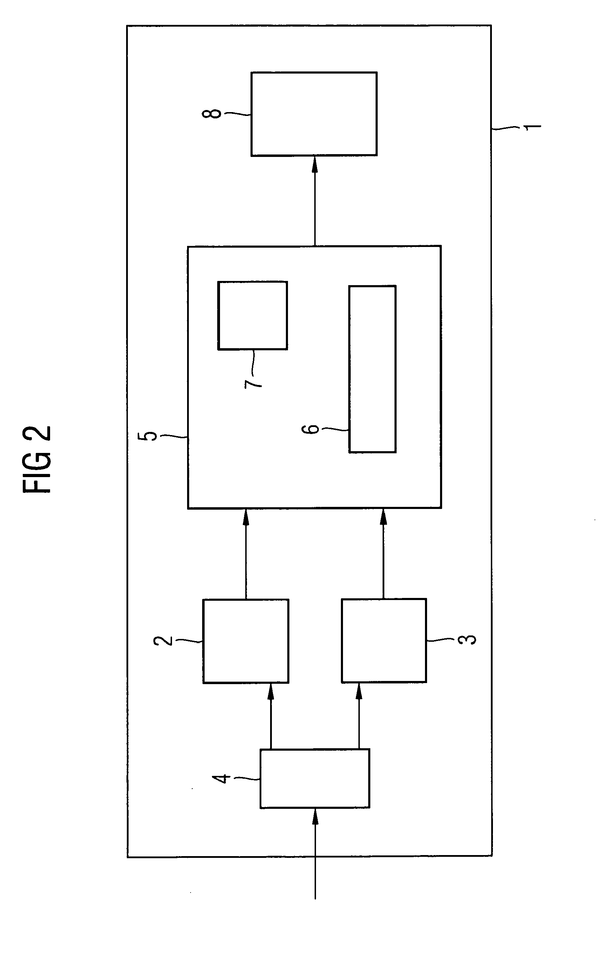

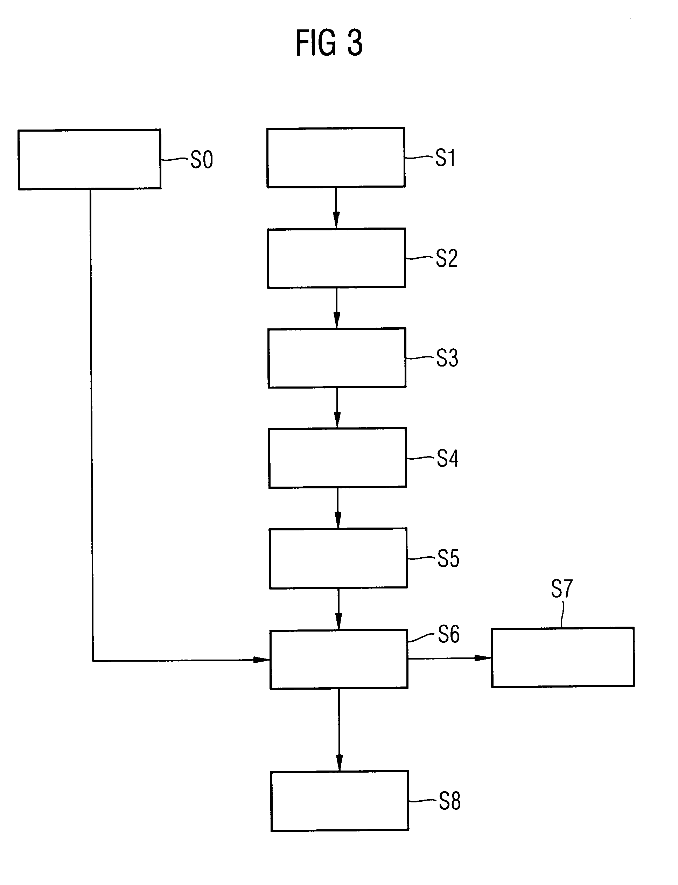

Figure 2 shows a risk-analysis system or apparatus which is implemented to execute a method for analyzing a risk in a project wherein the project involves a plurality of components. An embodiment of the corresponding method is illustrated as a flow chart in figure 3. In the following the operation of the risk-analysis system according to figure 2 is explained in conjunction with the flow chart of figure 3.

Figure 2 shows a risk analysis system 1 having an input device 4 which allows a user to insert data characterizing certain aspects of the project under consideration. The risk-analysis system 1 has a first data base device 2 and a second data base device 3. Both data base devices 2, 3 are coupled to a processing platform 5 that, for example, can be implemented as a microprocessor or a PC-system. The processing platform 5 is communicatively coupled to a display device 8, for example, for displaying the result of a risk analysis as diagrams. The processing platform 5 has a calculation device 6 and an internal data base device 7. The risk-analysis system 1 is operable to execute a method as explained with respect to figure 3.

First, in a step S0 risk values are assessed for each component in the project. The risk value refers to an intuitive value on a scale, for example, between 0 and 5 wherein a high score refers to a higher risk, i.e. relatively high probability for the occurrence. Intuitive risk values may be assessed or estimated by experts in a dedicated workshop or meeting. Referring to figure 2, a risk value can be input through the input device 4 into data base device 2.

Next, the processing platform 5, for each of the involved components, defines time-delay intervals. If for example maximum time delay can be expected for the project to be delayed, the time-delay intervals correspond to a maximum time delay divided by the number of time-delay intervals.

According to the method for risk analysis, a risk due to a component regarding a time delay is aggregated. Then, the expectation value of the costs will be examined. This means that the expected time delay of a project will depend on all risks regarding the respective component K. For calculating the expected likely time delay, the distribution for the time delay in the project needs to be estimated. Let $X^\kappa$ be a random variable corresponding to the time delay measured in discrete time units caused by risks that can be associated to a certain component K. Consequently, we consider the function or mapping:

$$(eq. 1) \quad \begin{aligned} R &\to [0,1] \\ t &\to P\left(X^\kappa \le t\right) \end{aligned},$$

where R relates to the set of real numbers and t corresponds to a time delay. Referring to the time-delay intervals one can define times $t_j$, j = 1...n.

Then stochastically independent scenarios or events $A^\kappa_{ij}$, i= 1...m, j=1...n are assumed. A scenario $A^\kappa_{ij}$ causes a time delay t due to component K with $t \in \lfloor t_{j,tj+1} \rfloor$. It is generally assumed that every delay causes a certain cost or expense to the project which undesired.

Next, as shown in figure 3, a step S2 a probability for the occurrence of a scenario $A^\kappa_{ij}$ can be assessed. This can be done in a workshop or meeting, where experts being familiar with the project and components assign the probability $P(A^\kappa_{ij})$. Since the scenarios $A^\kappa_{ij}$ are assumed to be stochastically independent, one may employ the following identity for two events A, B:

$$(eq. \ 2) \qquad P(A \cup B) = 1 - P(CA \cap B).$$

In particular, in the case of independent events A and B, one can rewrite equation 2 ad obtains:

$$(eq. \ 3) \qquad P(A \cup B) = 1 - P(CA)P(CB).$$

In these equations CA corresponds to the complement of A. One may further show that for an independent event or scenarios $A_i$ the following equation is true:

$$(eq. \ 4) \qquad P\left(\bigcup_{i=1}^{n} A_i\right) = 1 - \prod_{i=1}^{n} P(CA_i).$$

Employing equation 4 to the case where independent scenarios may lead to a time delay due to a certain component K one may write for the probabilities or the occurrence of a time delay caused by a certain component K, the time delay falling within the respective time-delay interval $[t_j, t_{j+i}]$:

$$(eq. \ 5) \qquad P\left(t_j \leq X^K < t_{j+1}\right) = P\left(\bigcup_{i=1}^{n} A_{ij}^K\right) = 1 - \prod_{i=1}^{n} P(CA_{ij}^K).$$

Referring back to figure 2, the scenario probabilities $P(A_{ij}^K)$ can be stored in the internal data base device 7 of the processing platform 5. One can see from the distribution function of the random variable $X^K$ that a step function is approximated.

Next, in a step S3 each time delay according to $X^K$ time units is assigned a respective cost $Cost(X^K)$. These cost values can be input through the input device 4 and stored in the second data base device 3 of the risk-analysis system 1. Again, the respective cost values can be assessed by experts in a workshop.

Due to equation 5 an aggregation of all risks can be done efficiently by calculating partial cost values as the summands of:

$$(eq. \ 6) \qquad \sum_{j=1}^{n-1} P(t_j \leq X^K < t_{j+1})Cost(X^K).$$

The sum over all time-delay intervals for a respective component K leads a quantitative measure for a risk of a time delay due to component K as opposed to an intuitive measure just given by the risk value according to step S0. According to the flow chart in figure 3, an aggregation following equation 5 is used in step S4 and consequently the risk in terms of the sum according to equation 6 leads to the quantitative risk measure. Respective calculations are done by the calculation device 6 of the processing platform 5.

Next, for a plausibility check, the intuitive risk values or gut feelings on a certain scale, for example between 0 and 5, are compared with the quantitative measure as a result of steps S1-S5. Step S6 involves comparing the (intuitive) risk value with the respective quantitative measure according to equation 6. As a result of the comparison, for example the calculation of a ratio between those two values, it can be decided whether the assessed risks are plausible or not as shown in step S8. Alternatively, the risk value and the quantitative measure can be displayed according to step S7 on a display device 8 of the risk analysis system 1.

By aggregating the risks of the single components an accurate risk or the occurrence of a time delay due to one component can be calculated. In particular, confronting the gut feeling or intuitive risk value with the weighted costs according to equation 6 is based on the same characteristics. There is no psychological dependence on the assessment of the experts anymore.

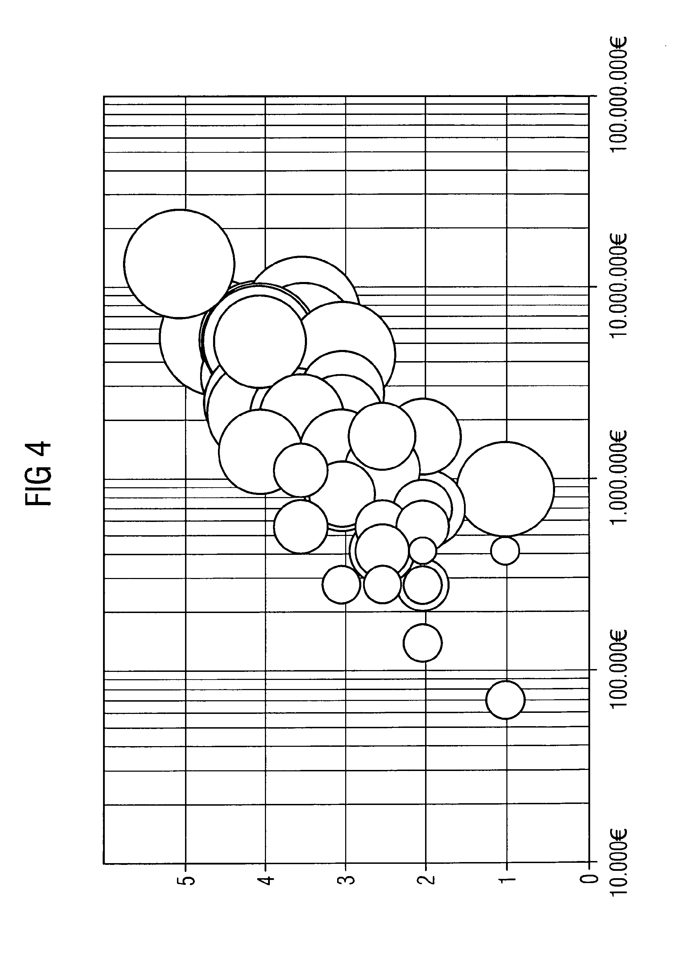

In order to perform a plausibility check on the risk analysis according to the before-mentioned embodiment of the method and risk analysis system, figure 4 shows an possible diagram. Figure 4 shows a scale for an intuitive risk value on the Y-axis. In a logarithmic scale the X-axis depicts weighted calculated costs according to equation 6. Each bubble or circle in the diagram corresponds to a component.

Consequently, the X-axis shows an intuitive estimation, the Y-axis an actual risk according to the calculations in the risk analysis, and the diameter of the bubble or circle refers to the probability of the occurrence of a risk for a delay due to a component. One can see from the diagram shown in figure 4, that the respective intuitive and quantitative risk assessment is implausible only for the bubbles or risks having an intuitive risk value of 1 and weighted costs of 750.000 EUR and 900.000 EUR, respectively. Those two risks need to be better examined. The other risk bubbles in figure 4 follow the region around a straight line from the origin of the diagram and are deemed to be plausible.

## Claims

1.   A risk-analysis apparatus (1) for analyzing a risk in a project (PJ), said project (PJ) involving a plurality of components (K), comprising:

a first database device (2), for each component (K), storing a risk value on a predetermined scale for an additional expense to said project (PJ) due to a time delay caused by said component (K);
a processing platform (5) coupled to a second database device (3) for calculating a quantitative measure for an additional expense to said project (PJ) due to a time delay caused by each component (K), wherein the processing platform (5) is implemented:

to set a plurality of discrete time-delay intervals;
to determine for each time-delay interval and each component (K) a component-delay probability for the occurrence of a time delay caused by said component (K), the time delay falling within the respective time-delay interval;
for each component (K), to retrieve a cost value assigned to each of said time-delay intervals reflecting an additional expense to said project (PJ) due to a time delay caused by said component (K), the time delay falling within a respective time-delay interval, the cost value being stored in the second database device (3); and
for each component (K), to determine the quantitative measure as a function of the cost values and the component-delay probabilities.

2.   The risk-analysis apparatus (1) of claim 1, further comprising an input device (4) implemented to receive the risk values and/or the cost values.

3.   The risk-analysis apparatus (1) of claim 1 or 2, wherein the processing platform (5) further comprises a calculation device (6) and a third database device (7), wherein the calculation device (6) is implemented:

for each component (K), to retrieve a plurality of independent scenario descriptions associated to said component (K), a respective scenario causing an additional expense to said project (PJ) due to a scenario-time delay, the scenario descriptions being stored in the third database device (7); and
for each scenario description and each time-delay interval, to retrieve a scenario probability for the occurrence of said scenario causing a time delay falling within the respective time-delay interval, the scenario probabilities being stored in the third database device (7); and
to calculate the component-delay probability as a function of the scenario probabilities.

4.   The risk-analysis apparatus (1) of claim 3, wherein the calculation device (6) is further implemented:

for each time-delay interval, to multiply the component-delay probability and the cost value assigned to the respective time-delay interval for generating a partial cost value;
to sum the partial cost values.

**5.** The risk-analysis apparatus (1) of anyone of claims 1 - 4, further comprising a display device (8) implemented to illustrate each component (K) in a risk value/quantitative measure diagram.

**6.** A method for analyzing a risk in a project (PJ), said project involving a plurality of components (K), comprising, for at least one component (K):

assessing a risk value on a predetermined scale for an additional expense to said project (PJ) due to a time delay caused by said component (K);
calculating a quantitative measure for an additional expense to said project (PJ) due to a time delay caused by said component (K);
comparing the risk value to the quantitative measure;
wherein calculating the quantitative measure comprises:
setting a plurality of discrete time-delay intervals;
for each time-delay interval, determining a component-delay probability for the occurrence of a time delay caused by said component (K), the time delay falling within the respective time-delay interval;
assigning a cost value to each of said time-delay intervals reflecting an additional expense to said project (PJ) due to a time delay caused by said component, the time delay falling within a respective time-delay interval; and
determining the quantitative measure as a function of the cost values and the component-delay probabilities.

**7.** The method of claim 6, wherein time delays are considered that are caused by a technical defect or malfunction of the respective component (K).

**8.** The method of claim 6 or 7, wherein determining the component-delay probability comprises:

setting a plurality of independent scenarios associated to said component (K), a scenario causing an additional expense to said project (PJ) due to a scenario-time delay;
for each scenario and each time-delay interval, assessing a scenario probability for the occurrence of said scenario causing a time delay falling within a respective time-delay interval; and
calculating the component-delay probability as a function of the scenario probabilities.

**9.** The method of claim 8, wherein calculating the component-probability comprises:

calculating a probability for the union of all scenarios.

**10.** The method of any one of claims 6 - 9, wherein determining the quantitative measure comprises:

for each time-delay interval, multiplying the component probability and the cost value assigned to the respective time-delay interval for generating a partial cost value;
summing the partial cost values.

**11.** The method of any one of claims 6 - 10, wherein comparing comprises calculating a ratio of the risk value and the quantitative measure.

**12.** The method of any one of claims 6 - 11, further comprising displaying each component (K) in a risk value/quantitative measure diagram.

**13.** The method of any one of claims 6 - 12, further comprising for said component (K), calculating a delay probability for the occurrence of an additional expense corresponding to the quantitative measure.

**14.** The method of claims 12 and 13, wherein each component (K) is displayed as a respective circular area, the circular area being dependent on the delay probability of the respective component (K).

**15.** The method of any one of claims 6 - 14, wherein the cost values are assigned as a function of additional logistical efforts or a contractual penalty.

**16.** A computer program product comprising computer readable program code embodied therein for performing a method of any one of claims 6 - 15.

**17.** A memory device storing the computer program product of claim 16.

EP 2 226 751 A1

# FIG 1

9

# FIG 2

EP 2 226 751 A1

# FIG 3

S0

S1

S2

S3

S4

S5

S6

S7

S8

FIG 4

EP 2 226 751 A1

Europäisches
Patentamt

European
Patent Office

Office européen
des brevets

# EUROPEAN SEARCH REPORT

Application Number

EP 09 00 3040

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| L | "STATEMENT IN ACCORDANCE WITH THE NOTICE FROM THE EUROPEAN PATENT OFFICE DATED 1 OCTOBER 2007 CONCERNING BUSINESS METHODS - EPC / ERKLAERUNG GEMAESS DER MITTEILUNG DES EUROPAEISCHEN PATENTAMTS VOM 1.OKTOBER 2007 UEBER GESCHAEFTSMETHODEN - EPU / DECLARATION CONFORMEMENT AU COMMUNIQUE DE L'OFFICE EUROP" JOURNAL OFFICIEL DE L'OFFICE EUROPEEN DES BREVETS.OFFICIAL JOURNAL OF THE EUROPEAN PATENT OFFICE.AMTSBLATTT DES EUROPAEISCHEN PATENTAMTS, OEB, MUNCHEN, DE, 1 November 2007 (2007-11-01), pages 592-593, XP007905525 ISSN: 0170-9291 Statement in accordance with the Notice from the European Patent Office dated 1 October 2007 concerning business methods(OJ 11/2007; p592-593) The claimed subject matter, with due regard to the description and drawings, relates to processes comprised in the list of subject matter and activities excluded from patentability under Art.52(2) and (3) EPC. The applicant is advised that in accordance with the established practice of the EPO, no search need be performed in respect of those aspects of the claimed invention. The only identifiable technical aspects of the claimed invention relate to the use of conventional, general-purpose data processing technology for processing data of an inherently non-technical nature. The information technology employed is considered to have been generally known as it was widely available to everyone at the date of filing/priority of the present application. The notoriety of such prior art cannot reasonably be contested. No | 1-17 | INV. G06Q10/00 |

**TECHNICAL FIELDS SEARCHED (IPC)**

G06Q

The present search report has been drawn up for all claims

| Place of search | Date of completion of the search | Examiner |
|---|---|---|
| The Hague | 29 July 2009 | Nicoli, Félix |

CATEGORY OF CITED DOCUMENTS

X : particularly relevant if taken alone
Y : particularly relevant if combined with another
    document of the same category
A : technological background
O : non-written disclosure
P : intermediate document

T : theory or principle underlying the invention
E : earlier patent document, but published on, or
    after the filing date
D : document cited in the application
L : document cited for other reasons
...........................................................................................................
& : member of the same patent family, corresponding
    document

EPO FORM 1503 03.82 (P04C01)

Europäisches
Patentamt

European
Patent Office

Office européen
des brevets

# EUROPEAN SEARCH REPORT

Application Number

EP 09 00 3040

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| | documentary evidence was therefore considered required. ----- | | |
| | | | **TECHNICAL FIELDS SEARCHED (IPC)** |

The present search report has been drawn up for all claims

| Place of search | Date of completion of the search | Examiner |
|---|---|---|
| The Hague | 29 July 2009 | Nicoli, Félix |

EPO FORM 1503 03.82 (P04C01)